Europäisches Patentamt

European Patent Office

Office européen des brevets

(11) Publication number: **0 404 394**
**A2**

# EUROPEAN PATENT APPLICATION

(21) Application number: **90306206.5**

(22) Date of filing: **07.06.90**

(51) Int. Cl.⁵: **G06F 15/62**

(30) Priority: **19.06.89 US 368469**

(43) Date of publication of application:
**27.12.90 Bulletin 90/52**

(84) Designated Contracting States:
**DE FR GB IT**

(71) Applicant: **International Business Machines Corporation**
**Old Orchard Road**
**Armonk, N.Y. 10504(US)**

(72) Inventor: **Deacon, John Joseph**
**6706 Rustling Oaks Trail**
**Austin TX 78727(US)**

(74) Representative: **Harris, Ian Richard**
**IBM United Kingdom Limited Intellectual**
**Property Department Hursley Park**
**Winchester, Hants. SO21 2JN(GB)**

(54) **Image processing system.**

(57) An image processing system for rapidly and efficiently converting a black and white image comprised of rows and columns of picture elements to a reduced size grayscale image wherein a dynamic determination is made of a specified number of picture elements from the black and white image which correspond to each new picture element within the reduced size grayscale image, a bit counting method is utilised to determine the number of black and white picture elements within each specified number of picture elements of the black and white image, the resultant tally being then utilised to access a table containing various grayscale values and the accessed grayscale value being assigned to an associated new picture element of the reduced size grayscale image.

EP 0 404 394 A2

*Fig. 1*  10

## IMAGE PROCESSING SYSTEM

The present invention relates to an image processing system for producing reduced size grayscale images from black and white images for display within a data processing system.

Images within data processing systems may be produced in black and white. That is, each image may be made up of multiple rows and columns of picture elements, each picture element being either black or white. Such systems are often utilised in data processing systems due to the facility with which an individual picture element may be characterised as black or white utilising a binary system. In such systems a binary value of one may be associated with either a black or white picture element and a binary value of zero is associated with the opposite value of a picture element.

Of course, those skilled in the art will appreciate that by black or white what is meant is a picture element which is either off or on. This is true despite the fact that image display systems in data processing systems often produce an image which is generated by a white phosphor, a green phosphor or an orange phosphor embedded within the display screen.

The increased capability of modern data processing systems to capture and reproduce images utilising sophisticated display devices has led to ever increased utilisation of such images in various applications. One problem which arises with the increased utilisation of images in data processing systems is the fact that it is often desirable to reduce the size of a black and white image from an existing set of dimensions to a smaller set of dimensions.

Many methods are employed in known image display management systems for resizing these images. For example, there are techniques which may be utilised to decrease the size of an image by deleting selected image information in a quasi-intelligent manner. Additionally, some systems employ sophisticated filters which utilise extensive floating point operations. Between these two approaches in terms of quality and speed is a technique which utilises calculated amounts of information from the original image data to create a resized image. This technique may be utilised to produce fairly accurate results; however, the amount of data manipulation which is required makes this approach expensive in terms of processor assets.

Additionally, it is often desirable to reproduce a large black and white image in a reduced grayscale image in order to produce a more legible image despite the constraints of smaller dimensions. Thus, it should be apparent that a need exists for an image processing system which may be utilised to rapidly and efficiently reduce a black and white image to a smaller grayscale image without the necessity of extensive processing.

Therefore, in accordance with the present invention there is provided an image processing system for producing a destination grayscale image of reduced size comprising rows and columns of destination picture elements from a source black and white image comprising rows and columns of source picture elements, each source picture element being either black or white, the system comprising: logic for dynamically determining groups of source picture elements which correspond to each destination picture element; logic for determining the number of black and/or white source picture elements within each group of source picture elements corresponding to each destination picture element; logic for selecting a particular grayscale value in response to the number of black and/or white source picture elements within each group of picture elements for each destination picture element and for assigning the particular grayscale value to each destination picture element. The invention permits the rapid and efficient reduction of black and white images to smaller grayscale images.

In a preferred form of the invention the image processing apparatus comprises operator input means for receiving operator inputs specifying the size of the destination image desired by an operator. The operator input means may be a keyboard or a mouse used in conjunction with a user interface in a manner well known in the art.

According to a preferred feature of the invention the image processing system comprises; means for storing a table containing a plurality of grayscale values; and wherein the logic for selecting a particular grayscale value in response to the number of black and/or white picture elements does so by accessing the table. Therefore a look-up table is employed to avoid repetitive calculations thus increasing the speed and efficiency of the image reduction process.

The image processing system can be a data processing system which can include other components such as a display device for displaying the destination image, a keyboard, a mouse, storage devices, communications links and the like. The image processing system can also be an adapter card for use with a data processing system.

The invention will best be understood by reference to the following detailed description when read in conjunction with the accompanying drawings, wherein:

Figure 1 depicts a block diagram of an image processing system in accordance with the present invention;

Figure 2A and 2B depict respectively in schematic form an original black and white image and a reduced size grayscale image created therefrom in accordance with the present invention;

Figure 3 depicts a grayscale value table which may be utilised to create a reduced size grayscale image in accordance with the present invention; and

Figure 4 depicts an interpretative table which may be utilised to create a reduced size grayscale image in accordance with the present invention.

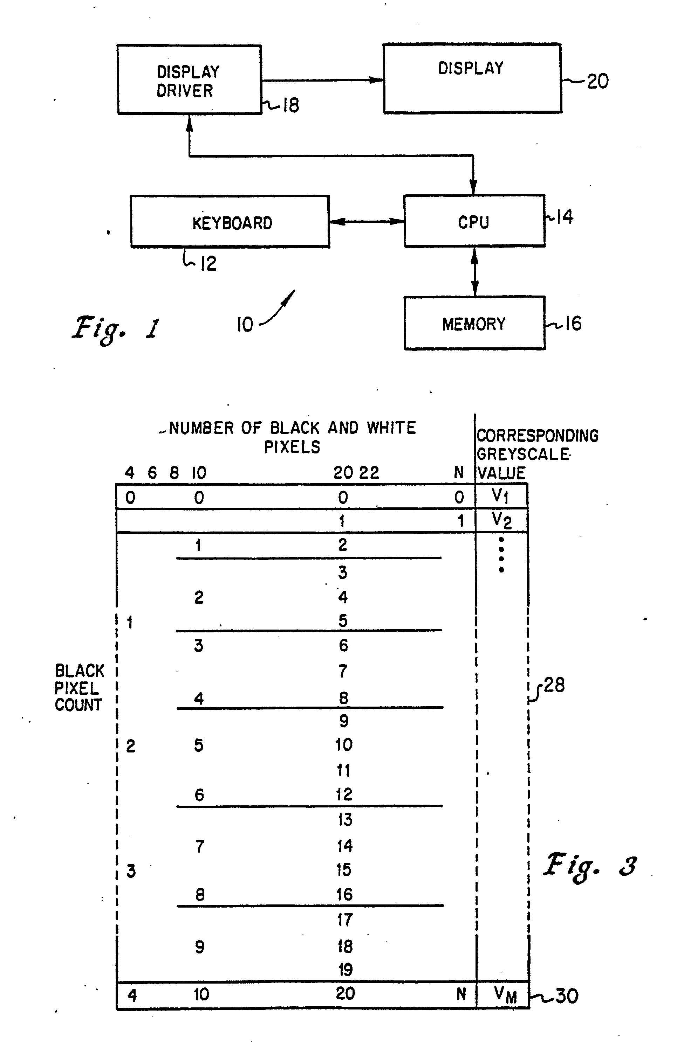

With reference now to the figures and in particular with reference to Figure 1, there is depicted in block diagram form an image processing system 10 which may be utilised in accordance with the present invention. In this embodiment the image processing system 10 is a data processing system including a keyboard 12 which is coupled to a central processing unit 14, in a manner well known in the art. Also coupled to central processing unit 14 is memory device 16, which may comprise both volatile and nonvolatile memory storage devices and which may include auxiliary memory devices such as magnetic disc or tape storage.

Central processing unit 14 is also coupled to display driver 18 which is utilised, in a manner well known in the art, to provide a visual display by coupling appropriate control signals to display 20. Those skilled in the art will appreciate that display 20 may be provided by monitor or other display device well known in the art. Image processing system 10 may, of course, include other components and may be provided by a personal computer such as the IBM Model No. PS/2 manufactured by International Business Machines Corporation of Armonk, New York.

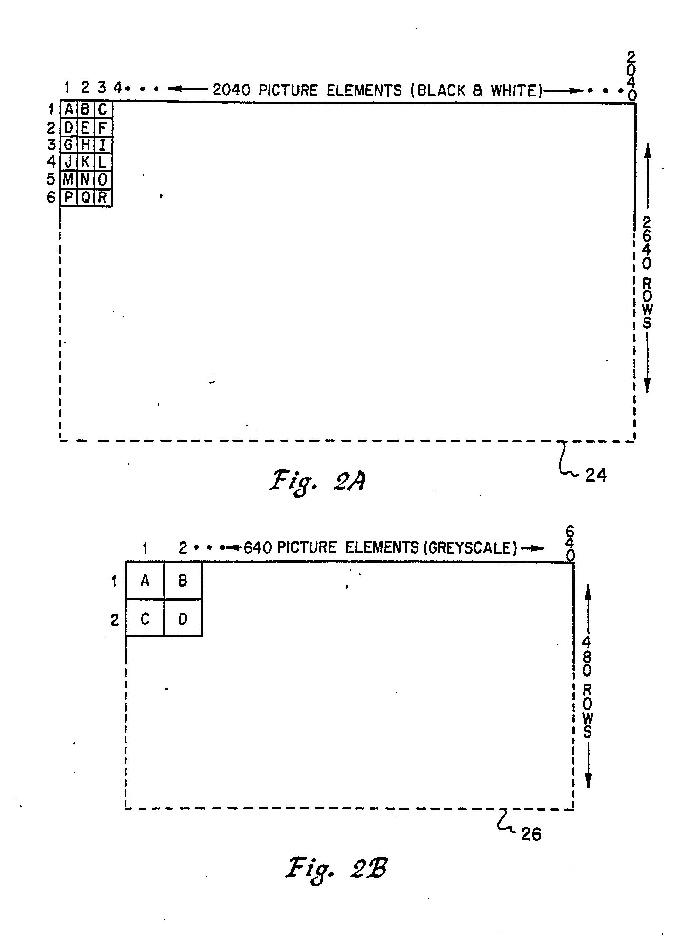

Referring now to Figures 2A and 2B, there are depicted respectively in schematic form an original black and white image and a reduced size grayscale image created therefrom in accordance with the present invention. As may be seen, Figure 2A depicts a black and white image 24 which is comprised of multiple rows and columns of picture elements or pixels. Black and white image 24, as depicted in Figure 2A, is comprised of a matrix of picture elements which is 2,040 columns by 2,640 rows. Of course, those skilled in the art will appreciate that each picture element within the aforementioned matrix may be characterised in a binary scheme as a one or a zero, the one or zero corresponding to an indication of whether the particular picture element is to be considered "on" or white or "off" or black.

Referring now to Figure 2B, there is depicted a reduced size grayscale image 26 which is created from black and white image 24 of Figure 2A. As may be seen, reduced size grayscale image 26 within Figure 2B is comprised of a matrix of picture elements which is 640 columns by 480 rows. As is typical in grayscale images, each picture element within the matrix which forms reduced size grayscale image 26 is characterised by a grayscale value which is one of the permitted magnitudes of luminescence which data processing system 10 may accommodate.

In view of the size differentials chosen in the example depicted, it should be apparent that picture element A of reduced size grayscale image 26 will be comprised of all or most of picture elements A through R of black and white image 24.

Simple mathematics will lead those skilled in the art to appreciate that picture element A of reduced grayscale image 26 will, in a perfect conversion, be equivalent to 3.1875 picture elements in a horizontal direction within black and white image 24 and 5.5 picture elements in a vertical direction within black and white image 24. However, it is possible to create a very effective reduced grayscale image from a black and white image by rounding off the number of picture elements within black and white image 24 which will correspond to a new picture element within reduced grayscale image 26 to the nearest whole number of picture elements. This greatly simplifies the calculations involved without causing a noticeable deterioration in image quality. Thus, in the depicted embodiment of the present invention, the luminescence level of picture element A of reduced grayscale image 26 is determined by examining a specified number of picture elements within black and white image 24. That specified number of picture elements is 18 picture elements which are labelled A through R respectively.

Thus, the grayscale value for picture element A of reduced grayscale image 26 may be calculated by totaling the binary values of picture elements A through R of black and white image 24 and then dividing that total by 18. This resultant factor may then be multiplied by the total number of grayscale values which data processing system 10 may accommodate to determine the proper grayscale value for picture element A of reduced grayscale image 26. In this manner, each of the over 300,000 picture elements within reduced grayscale image 26 will require 18 additions, one division and one multiplication in order to calculate the appropriate value. It should be apparent that this process is quite expensive in terms of processor assets and a system which utilises only additions or subtractions in combination with a look-up table will necessarily be more efficient and rapid in terms of producing a reduced size grayscale image.

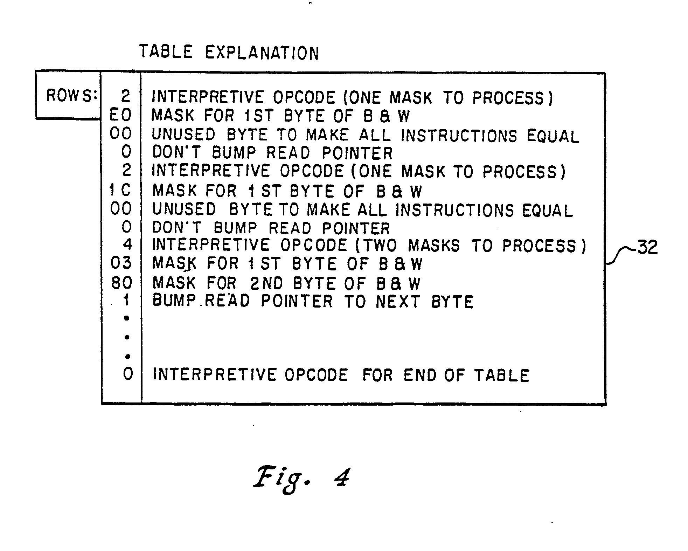

With reference now to Figure 3, there is depicted a grayscale value table which may be utilised to create a reduced size grayscale image in accordance with the present invention. As may be seen, grayscale value table 28 includes a rightmost column 30 which lists each corresponding grayscale value which data processing system 10 (see Figure 1) will accommodate. For example, if data processing system 10 will accommodate 64 grayscale values, then grayscale value table 28 will include 64 rows, each of which will correspond to a particular grayscale value.

Grayscale value table 28 also includes a plurality of other columns, each of which corresponds to the number of black and white picture elements or pixels, which will be included within each new picture element within reduced grayscale image 26. As may be seen, the number of black and white picture elements which will be included within each new picture element of reduced grayscale image 26 will vary in direct relation to the dimensions of the reduced grayscale image selected by the system operator.

The greater the amount of reduction selected, the greater will be the number of black and white picture elements which will correspond to each new picture element within the reduced grayscale image. Next, the number of black picture elements within each specified group of black and white picture elements is counted, utilising a bit counting scheme. Those skilled in the art should appreciate that either black picture elements or white picture elements may be counted and may be utilised to generate the same result, since the union of all black picture elements and all white picture elements will equal the total number of picture elements.

After counting either the number of black picture elements or white picture elements, grayscale value table 28 may be accessed utilising that count number under the column which corresponds to the number of black and white picture elements within each reduced grayscale image picture element. Thereafter, the corresponding grayscale value which is listed in the rightmost row will be assigned to the new picture element within the reduced grayscale image.

Upon reference to the foregoing explanation, those skilled in the art will appreciate that the number of grayscale values which may be generated utilising the foregoing method and apparatus will be limited to the number of black and white picture elements which correspond to each reduced grayscale image picture element. That is, if a reduction is selected which results in four black and white picture elements corresponding to each reduced grayscale picture element, then only five grayscale values will result, despite the capability of data processing system 10 to accommodate a larger number of grayscale values.

Similarly, if each new picture element within the reduced grayscale image will correspond to 20 black and white picture elements, then 21 different grayscale values will be generated. This is true due to the fact that if each black and white picture element within a specified group which corresponds to a reduced grayscale image picture element is white then the reduced grayscale picture element will be white. If all of the black and white picture elements within a group which corresponds to a reduced grayscale image picture element are black, then the corresponding reduced grayscale image picture element will be black. The variations which are possible between these two conditions are limited to the number of picture elements from the black and white image which correspond to each new picture element within the reduced grayscale image.

Finally, referring now to Figure 4, there is depicted an interpretative table which may be utilised to create a reduced size grayscale image in accordance with the present invention. In this embodiment interpretative table 32 is dynamically created in response to the selection by an operator of the dimensions of the reduced grayscale image. As is illustrated, interpretative table 32 operates upon each row in black and white image 24 (see Figure 2A) and includes an interpretative operator code which specifies how many eight bit masks must be processed in each iterative step. Next, a mask code is listed for the first byte of black and white picture elements which will be processed. This mask code is a hexadecimal code which simply specifies which picture elements within an eight bit mask will be operated upon in the current iteration.

As interpretative table 32 has been selected to correspond to the reduction of a 2,040 column by 2,640 row black and white image to a 640 column by 480 row reduced grayscale image, as illustrated in Figures 2A and 2B, it will be apparent that a submatrix of three horizontal picture elements by six vertical picture elements will be operated upon to create each new picture element within the reduced grayscale image. Thus, a read pointer is listed within interpretative table 32 to indicate that the first eight bit mask will also be operated upon in the next iteration within interpretative table 32. Next, an interpretative operator code is listed again, indicating that only one mask is to be processed and a hexadecimal code is once again listed indicating that the second three bits within the first byte of black and white picture elements will be processed during this iteration.

An unused byte is placed within interpretative table 32 at this point to equalise the length of all instructions and a read pointer is once again utilised to indicate that the process will continue within the first byte of black and white picture elements. Next, the interpretative operator code is changed to indicate that during this iteration two masks of black and white picture elements will be processed. Of course, this is necessary due to the fact that if three columns of picture elements within black and white image 24 (see Figure 2A) are to be processed, two of those columns will be contained within the first byte of black and white picture elements and the third will be contained within the second byte of black and white picture elements. This is further illustrated by the generation of two hexadecimal masks for the first and second byte of black and white picture elements which are utilised to specify that the last two bits within the first byte and the first bit within the second byte will be processed.

A bump read pointer is next utilised to illustrate that the process will begin during the next iteration in the next byte of black and white picture elements. Finally, an interpretative operator code is listed at the end of the table to indicate that an entire row has been processed and thereafter the next row will be processed by utilising the information within interpretative table 32. In this manner, the output of each row is accumulated until a sufficient number of rows has been processed to generate an output row of new picture elements for a reduced grayscale image. In the illustrated example this will occur after six rows of black and white picture elements have been processed.

In the manner described herein, it is possible to rapidly reduce a black and white image to a set of smaller dimensions while automatically incorporating a grayscale value with each new picture element within the reduced image. This is accomplished by utilising a grayscale value table which rapidly determines the grayscale value for each new picture element within the reduced grayscale image by directly accessing that value in response to a determination of the number of black and white picture elements within those specified picture elements which correspond to each new picture element within the reduced grayscale image. Those skilled in the art should appreciate that this method permits a rapid determination of the grayscale value for each new picture element within the reduced grayscale image without the necessity of performing multiplication and division operations which necessarily require extensive processor time.

A dynamically created interpretative table is established specifying the size of the reduced grayscale image which is desired and this table includes only the non-repetitive information which is necessary to specify the number of black and white picture elements which will correspond to each new picture element within the reduced grayscale image. The aforementioned table is then utilised to process one row of the black and white image at a time and the row values are accumulated until a sufficient number of columns have been processed to provide an output row. Those skilled in the art will appreciate that the aspect ratio of a given image may be retained or dismissed, as desired, and may be controlled by operator inputs.

The tables 28, 32 and the control logic in this embodiment are stored in the memory 16. There are however many other possibilities, they could, for example be stored in special purpose storage located on an adapter card.

There has been described image processing system or apparatus and a method of operation which may be utilised to rapidly and efficiently convert a black and white image comprised of rows and columns of picture elements to a reduced size grayscale image. Each picture element within the black and white image is either black or white. A dynamic determination is made of a specified number of picture elements from the black and white image which correspond to each new picture element within the reduced size grayscale image. Next, a bit counting method is utilised to determine the number of black and white picture elements within each specified number of picture elements of the black and white image. The resultant tally is then utilised to access a table containing various grayscale values and the accessed grayscale value is assigned to an associated new picture element of the reduced size grayscale image. In a preferred embodiment of the present invention, the determination of the specified number of picture elements from the black and white image which correspond to each new picture element within the reduced size grayscale image is rounded off to the nearest whole number of picture elements.

While the invention has been particularly shown and described with reference to a preferred embodiment, it will be understood by those skilled in the art that various changes may be made therein without departing from the scope of the invention.

## Claims

1. Image processing system for producing a destination grayscale image of reduced size comprising rows and columns of destination picture elements from a source black and white image comprising rows and columns of source picture elements, each source picture element being either black or white, the system comprising:
logic for dynamically determining groups of source picture elements which correspond to each destination picture element;

logic for determining the number of black and/or white source picture elements within each group of source picture elements corresponding to each destination picture element;

logic for selecting a particular grayscale value in response to the number of black and/or white source picture elements within each group of picture elements for each destination picture element and for assigning the particular grayscale value to each destination picture element.

2. Image processing system as claimed in Claim 1 comprising operator input means for receiving operator inputs specifying the size of the destination image desired by an operator.

3. Image processing system as claimed in Claim 1 or Claim 2 comprising;

means for storing a table containing a plurality of grayscale values;

and wherein the logic for selecting a particular grayscale value in response to the number of black and/or white picture elements does so by accessing the table.

4. Image processing system as claimed in any preceding claim wherein the logic for determining groups comprises logic for calculating the exact number of source picture elements which correspond to each destination picture element and logic for rounding off the exact number to the nearest whole number of source picture elements.

5. Image processing system as claimed in any preceding claim wherein the logic for determining the number of black and/or white source picture elements includes means for counting each black picture element within each group of source picture elements.

6. Image processing system as claimed in any preceding claim comprising a display device for displaying the destination image.

7. A method for producing a destination grayscale image of reduced size comprised of rows and columns of destination picture elements from a black and white source image comprised of rows and columns of source picture elements, each source picture element being either black or white, the method comprising the steps of:

dynamically determining groups of source picture elements which correspond to each destination picture element;

determining the number of black and/or white picture elements within each group of source picture elements;

selecting a particular grayscale value in response to the number of black and/or white source picture elements for each destination picture element; and

assigning the particular grayscale value to each of the destination picture elements.

8. A method as claimed in Claim 7 comprising the step of establishing a table which contains a plurality of grayscale values and wherein the step of selecting a particular grayscale value in response to the number of black and/or white source picture elements comprises accessing a particular one of the grayscale values in response to the number of black and/or white source picture elements within each group of source picture elements.

9. A method as claimed in Claim 7 or Claim 8 wherein the step of determining the number of black and/or white source picture elements within each group of source picture elements comprises the step of counting the number of black picture elements therein.

10. A method as claimed in any of Claims 7 to 9 wherein the step of dynamically determining groups of source picture elements which correspond to each destination picture element comprises the step of rounding off the exact number of source picture elements which correspond to each destination picture element image to the nearest whole number of picture elements.

EP 0 404 394 A2

DISPLAY
DRIVER  ~18

DISPLAY  ~20

KEYBOARD  ~12

CPU  ~14

MEMORY  ~16

*Fig. 1*  10

NUMBER OF BLACK AND WHITE PIXELS

| 4 | 6 | 8 | 10 | 20 | 22 | N | CORRESPONDING GREYSCALE VALUE |
|---|---|---|---|---|---|---|---|
| 0 | | | 0 | 0 | | 0 | $V_1$ |
| | | | | 1 | | 1 | $V_2$ |
| | | | 1 | 2 | | | $\vdots$ |
| | | | | 3 | | | |
| | | | 2 | 4 | | | |
| 1 | | | | 5 | | | |
| | | | 3 | 6 | | | |
| | | | | 7 | | | |
| | | | 4 | 8 | | | 28 |
| | | | | 9 | | | |
| 2 | | | 5 | 10 | | | |
| | | | | 11 | | | |
| | | | 6 | 12 | | | |
| | | | | 13 | | | |
| | | | 7 | 14 | | | |
| 3 | | | | 15 | | | |
| | | | 8 | 16 | | | |
| | | | | 17 | | | |
| | | | 9 | 18 | | | |
| | | | | 19 | | | |
| 4 | | | 10 | 20 | | N | $V_M$  ~30 |

BLACK PIXEL COUNT

*Fig. 3*

1 2 3 4 • • • ← 2040 PICTURE ELEMENTS (BLACK & WHITE) → • • • 2040

| 1 | A | B | C |
| 2 | D | E | F |
| 3 | G | H | I |
| 4 | J | K | L |
| 5 | M | N | O |
| 6 | P | Q | R |

2640 ROWS

24

*Fig. 2A*

1 2 • • • ← 640 PICTURE ELEMENTS (GREYSCALE) → 640

| 1 | A | B |
| 2 | C | D |

480 ROWS

26

*Fig. 2B*

TABLE EXPLANATION

| ROWS: | | |
|---|---|---|
| | 2 | INTERPRETIVE OPCODE (ONE MASK TO PROCESS) |
| | EO | MASK FOR 1ST BYTE OF B & W |
| | OO | UNUSED BYTE TO MAKE ALL INSTRUCTIONS EQUAL |
| | O | DON'T BUMP READ POINTER |
| | 2 | INTERPRETIVE OPCODE (ONE MASK TO PROCESS) |
| | 1C | MASK FOR 1ST BYTE OF B & W |
| | OO | UNUSED BYTE TO MAKE ALL INSTRUCTIONS EQUAL |
| | O | DON'T BUMP READ POINTER |
| | 4 | INTERPRETIVE OPCODE (TWO MASKS TO PROCESS) |
| | 03 | MASK FOR 1ST BYTE OF B & W |
| | 80 | MASK FOR 2ND BYTE OF B & W |
| | 1 | BUMP READ POINTER TO NEXT BYTE |
| | • | |
| | • | |
| | • | |
| | O | INTERPRETIVE OPCODE FOR END OF TABLE |

~32

*Fig. 4*